Europäisches Patentamt

(19) European Patent Office

Office européen des brevets

(11) Veröffentlichungsnummer: **0 101 016**
**B1**

(12) **EUROPÄISCHE PATENTSCHRIFT**

(45) Veröffentlichungstag der Patentschrift:
20.11.86

(51) Int. Cl.⁴: **B 23 K 26/00**

(21) Anmeldenummer: **83107660.9**

(22) Anmeldetag: **03.08.83**

(54) Verfahren und Vorrichtung zum Erzeugen endloser Metallbänder durch Zusammenschweissen von endlichen Walzbandabschnitten.

(30) Priorität: **17.08.82 DE 3230595**

(43) Veröffentlichungstag der Anmeldung:
**22.02.84 Patentblatt 84/8**

(45) Bekanntmachung des Hinweises auf die Patenterteilung:
**20.11.86 Patentblatt 86/47**

(84) Benannte Vertragsstaaten:
**DE FR GB**

(56) Entgegenhaltungen:
**DE - A - 2 515 925**
**US - A - 4 029 932**

(73) Patentinhaber: **Siemens Aktiengesellschaft Berlin und München, Wittelsbacherplatz 2, D-8000 München 2 (DE)**

(72) Erfinder: **Lamatsch, Hans, Dr., Ratzeburger Strasse 9, D-8500 Nürnberg (DE)**
Erfinder: **Rosen, Hans-Georg, Weidenstrasse 2, D-8021 Hohenschäftlarn (DE)**

## Beschreibung

Die Erfindung betrifft ein Verfahren zum Erzeugen endloser Metallbänder nach dem Oberbegriff des Anspruches 1 und eine Vorrichtung zur Durchführung des Verfahrens gemäss dem Oberbegriff des Anspruches 2.

Durch die DE-PS 2 934 115 ist ein Verfahren zum Speichern endloser Metallbänder aus endlichen Walzbandlängen bekannt, bei welchem jeweils das Ende einer vorlaufenden, endlichen Bandlänge mit dem Anfang einer nachlaufenden endlichen Bandlänge verschweisst wird. Das sich bewegende Bandmaterial wird zeitweise in die Form eines Bandwickels gebracht und gespeichert, sowie anschliessend wieder aus dem Wikkelzustand zur kontinuierlichen Weiterverarbeitung oder -behandlung abgezogen. Dabei werden die jeweils zu verschweissenden Bandlängen in ihrem End- und Anfangsbereich erfasst und dann von entgegengesetzten Seiten her gemeinsam und im gleichen Drehsinn doppellagig aufgewickelt.

Aufgabe der Erfindung ist, ein Schweissverfahren anzugeben, welches auf einfache Weise das Verbinden von zu verarbeitenden Metallbändern innerhalb rotierender Speichertrommeln ermöglicht.

Die erfindungsgemässe Lösung dieser Aufgabe ist im Kennzeichen des Anspruches 1 erfasst. Eine Vorrichtung zur Durchführung des Verfahrens ist im Anspruch 2 angegeben. Vorteilhafte Weiterbildungen der Vorrichtung gemäss Anspruch 2 sind in den Unteransprüchen 3 und 4 angegeben.

Mit dem erfindungsgemässen Verfahren und der zugehörigen Vorrichtung wird die Stossfuge des zu schweissenden Bandes innerhalb des Trommelspeichers, aber ausserhalb der Drehachse, jedoch zu dieser parallel, fixiert. Zweckmässig ist dabei, einen grösseren Abstand zwischen Ablenkvorrichtung und Schweissstelle zu ermöglichen, was zu einem erhöhten Schutz der Ablenkvorrichtungen vor Schweissspritzern und -dämpfen führt und damit eine höhere Standzeit der Vorrichtung sicherstellt. Eine weitere Erhöhung der Standzeit kann vorteilhafterweise dadurch erreicht werden, dass der Ablenk-Winkel der verschiebbaren Ablenkvorrichtung etwas über oder unter 90° eingestellt wird. Beim Schweissen in Überkopfposition befindet sich dann diese Ablenkvorrichtung nicht genau unterhalb der Schweissstelle, so dass ein grosser Teil der Schweissspritzer neben der Ablenkvorrichtung auf Schutzelementen aufgefangen werden kann.

Der wesentliche Vorteil bei der Anwendung eines Energiestrahlschweissverfahrens, zum Beispiel Laserstrahlschweissen, für das Verbinden der zu verarbeitenden Bänder innerhalb der rotierenden Speichertrommel liegt darin, dass es nicht notwendig ist, die Schweissenergie über rotierende, materielle Verbindungselemente, z.B. Schleifringe, in den rotierenden Trommelspeicher einzuführen. Die erfindungsgemäss notwendigen Ablenkvorrichtungen, insbesondere Oberflächenspiegel, können vergleichbar leicht und klein aufgebaut sein.

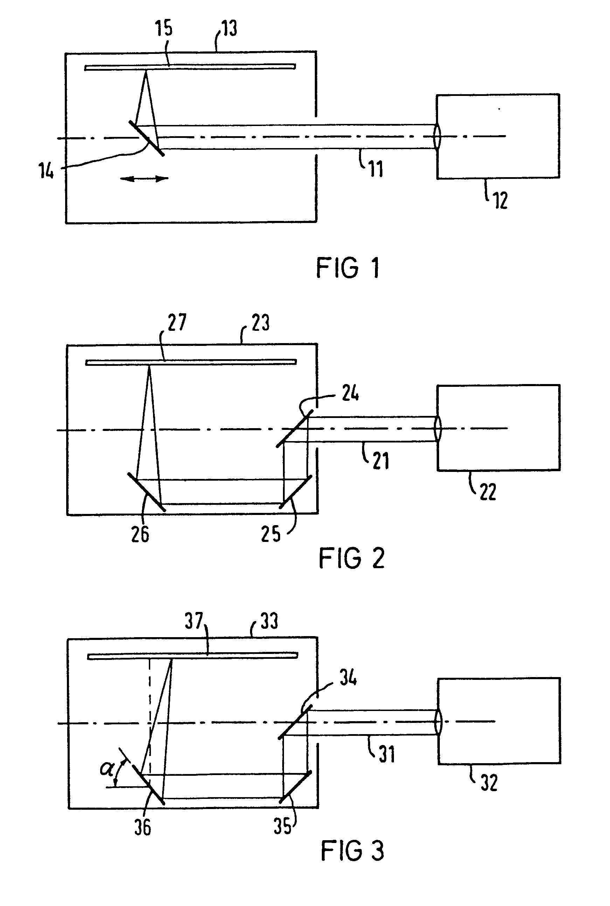

Anhand von Figuren wird der Gegenstand der Erfindung ausführlich erläutert. Hierbei zeigen die Figuren 1 bis 3 in schematisch vereinfachter Darstellung verschiedene Vorrichtungen zum Zusammenschweissen endloser Metallbänder innerhalb rotierender Trommelspeicher.

Aus Fig. 1 ist ersichtlich, dass ein Laserstrahl 11, der von einer Laserquelle 12 ausgeht, entlang der Achse eines Trommelspeichers 13 auf einen Oberflächenspiegel 14 als Ablenkvorrichtung geführt wird und von dort unter einem Winkel von etwa 90° quer zur Längsachse eines zu verarbeitenden Metallbandes 15 abgelenkt wird. Der abgelenkte Laserstrahl trifft auf die vorgegebene Stelle des Metallbandes 15 und erzeugt dort die erforderliche Schweissnaht.

In Fig. 2 ist ein anderes Ausführungsbeispiel dargestellt. Der von dem Energiestrahlerzeuger 22 ausgehende Laserstrahl 21 wird nacheinander über Ablenkvorrichtungen 24, 25 und 26 geleitet. Die Ablenkvorrichtungen können z.B. 1 wieder Oberflächenspiegel sein. Die letzte Ablenkvorrichtung 26 wird parallel zur Achse des Trommelspeichers 23 verschoben. Diese Ausführung ermöglicht einen grösseren Abstand zwischen Ablenkvorrichtung 26 und Schweissstelle 27.

Aus Fig. 3 ist ersichtlich, wie eine weitere Erhöhung der Standzeit erreicht werden kann. Aus dem Energiestrahlerzeuger 32 tritt der Laserstrahl 31 axial in den Trommelspeicher 33 ein und wird zunächst von der Ablenkvorrichtung 34 um 90° abgelenkt und trifft auf die zweite Ablenkvorrichtung 35. An dieser Ablenkvorrichtung 35 wird der Laserstrahl wiederum um 90° abgelenkt und trifft nunmehr auf die dritte Ablenkvorrichtung 36. Die Ablenkvorrichtung 36 ist parallel zur Achse des Trommelspeichers 33 verschiebbar. Diese verschiebbare Ablenkvorrichtung 36 ist in einem Winkel zwischen 45 und 90° eingestellt. Beim Schweissen in Überkopfposition befindet sich dann diese Ablenkvorrichtung 36 nicht genau unterhalb der Schweissstelle 37.

## Patentansprüche

1. Verfahren zum Erzeugen endloser Metallbänder (15) durch Zusammenschweissen von endlichen Walzbandabschnitten, wobei die sich bewegenden Bandabschnitte in einen rotierenden Trommelspeicher (13, 23, 33) zur Zwischenlagerung eingebracht werden, dadurch gekennzeichnet, dass ein von einem ortsfest angeordneten Energiestrahlerzeuger hervorgerufener Energiestrahl (11, 21, 31) nach koaxialer Einführung in den einschliesslich der Bandabschnitte rotierenden Trommelspeicher (13, 23, 33) unter mindestens einmaliger Umlenkung von etwa 90° fortlaufend auf die vorgegebenen Schweissstellen entlang der Anfangs- bzw. Endkanten der Bandabschnitte (15, 27, 37) gelenkt wird, so dass gerade Schweissnähte gebildet werden.

2. Vorrichtung zur Durchführung des Verfahrens nach Anspruch 1, welche einen mit Bandabschnitten rotierenden Trommelspeicher (13, 23, 33) umfasst, dadurch gekennzeichnet, dass ein ausserhalb des Trommelspeichers (13, 23, 33) ortsfest angeordneter Energiestrahlerzeuger (12, 22, 32), insbesondere Laserstrahlerzeuger, vorhanden ist und dass im Trommelspeicher (13, 23, 33) eine in dessen Achsrichtung bewegliche Ablenkeinrichtung (14, 26, 36) für den Energiestrahl, insbesondere Oberflächenspiegel, angeordnet ist.

3. Vorrichtung nach Anspruch 2, dadurch gekennzeichnet, dass im rotierenden Trommelspeicher (23, 33) weitere ortsfeste Ablenkeinrichtungen (24, 25, 34, 35), insbesondere Oberflächenspiegel, angeordnet sind.

4. Vorrichtung nach Anspruch 2, dadurch gekennzeichnet, dass die entlang der Achse des rotierenden Trommelspeichers (13, 23, 33) bewegliche Ablenkeinrichtung (14, 26, 36), insbesondere Oberflächenspiegel, in ihrem Winkel ($\alpha$) in Bezug auf die Achse des Trommelspeichers (13, 23, 33) veränderbar ist.

## Claims

1. A process for producing metal strips (15) of infinite length by welding together rolled strip sections of limited length, where the moving strip sections are inserted into a rotating drum store (13, 23, 33) for interpositioning, characterised in that after coaxial insertion into the drum store (13, 23, 33) which rotates together with the strip sections, a beam of energy (11, 21, 31) produced by a stationary energy beam generator is continuously directed on to predetermined welding points along the starting and end edges of the strip sections (15, 27, 37) with at least one deflection through about 90°, so that straight welding seams are formed.

2. Apparatus for carrying out the process as claimed in Claim 1 which comprises a drum store (13, 23, 33) which rotates with strip sections, characterised in that there is provided an energy beam generator (12, 22, 32), which is arranged to be stationary outside the drum store (13, 23, 33), in particular a laser beam generator; and that in the drum store (13, 23, 33), a deflecting device for the energy beam (14, 26, 36) is arranged, which is movable in the axial direction of the drum store, in particular a surface mirror.

3. Apparatus as claimed in Claim 2, characterised in that further stationary deflecting devices (24, 25, 34, 35), in particular surface mirrors, are arranged in the rotating drum store (23, 33).

4. Apparatus as claimed in Claim 2, characterised in that the deflecting device (14, 26, 36), in particular a surface mirror, which is movable along the axis of the rotating drum store (13, 23, 33), can be changed in its angle ($\alpha$) relative to the axis of the drum store (13, 23, 33).

## Revendications

1. Procédé pour fabriquer des feuillards sans fin (15) par réunion par soudage d'éléments finis de feuillards laminés, les éléments de feuillard en déplacement étant amenés, en vue de leur stockage temporaire, sur un tambour accumulateur rotatif (13, 23, 33), caractérisé par le fait qu'un faisceau d'énergie (11, 21, 31) produit par un générateur de faisceau d'énergie monté fixe est dévié en permanence, conformément à au moins une déviation à environ 90°, après son introduction coaxiale dans le tambour accumulateur (13, 23, 33) tournant y compris les éléments de feuillard, sur les zones prédéterminées de soudage le long du bord initial ou du bord final des éléments de feuillard (15, 27, 37) de sorte qu'il se forme des lignes de soudure rectilignes.

2. Dispositif pour la mise en œuvre du procédé suivant la revendication 1, qui comporte un tambour accumulateur (13, 23, 33) tournant, y compris les éléments de feuillard, caractérisé par le fait qu'il est prévu un générateur de faisceau d'énergie (12, 22, 32), notamment un générateur de faisceau laser, monté fixe à l'extérieur du tambour accumulateur (13, 23, 33) et que dans le tambour accumulateur (13, 23, 33) se trouve disposé un dispositif déflecteur (14, 26, 36) déplaçable suivant la direction de l'axe du tambour, pour le faisceau d'énergie, notamment un miroir de surface.

3. Dispositif suivant la revendication 2, caractérisé par le fait que d'autres dispositifs déflecteurs fixes (24, 25, 34, 35), notamment des miroirs de surface, sont disposés dans le tambour accumulateur rotatif (23, 33).

4. Dispositif suivant la revendication 2, caractérisé par le fait que l'angle ($\alpha$) du dispositif déflecteur (26, 36), notamment un miroir de surface, déplaçable le long de l'axe du tambour accumulateur rotatif (13, 23, 33) par rapport à cet axe, est modifiable.

**FIG 1**

**FIG 2**

**FIG 3**